# EUROPÄISCHE PATENTSCHRIFT

(11) **EP 1 208 738 B1**
(45) Veröffentlichungstag und Bekanntmachung des Hinweises auf die Patenterteilung: **15.06.2005**
(21) Anmeldenummer: 01126631.9
(22) Anmeldetag: 08.11.2001
(51) Int. Cl.: A01F 15/10, A01D 89/00

(54) **Stelleinrichtung eines Aufnehmers für Erntegut**
Positioning device for an agricultural pick-up
Dispositif de positionnement pour un ramasseur agricole

(30) Priorität: 17.11.2000 DE 10057135
(43) Veröffentlichungstag der Anmeldung: 29.05.2002
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 0 203 662
- EP-A- 0 774 383
- DE-A- 4 115 056
- DE-U- 29 922 193
- US-A- 5 299 413
- US-A- 5 752 374
- US-A- 5 913 801

## Beschreibung

Die Erfindung betrifft eine Stelleinrichtung eines Aufnehmers für Erntegut an einer landwirtschaftlichen Presse mit einer Stellvorrichtung zum Verändern des Abstandes zwischen dem Aufnehmer und dem Boden.

Pressen, insbesondere Rundballenpressen heutiger Bauweise WO-A1-98/17096 sind mit Aufnehmern, sog. Pick-Ups versehen, die möglichst breite Schwaden aufnehmen sollen, damit eine hohe Erntekapazität erreicht wird. Damit der Aufnehmer stets einen bestimmten Abstand zum Boden einhält, sind Stützräder an ihm vorgesehen, die in verschiedenen Stellungen an dem Aufnehmer befestigbar sind. Damit die Stützräder während des Transports nicht über die seitlichen Abmessungen der Presse hinausragen, sind sie seitlich verstellbar.

Die EP-A-203 662 und die US-A-5,913,801 offenbaren jeweils ein Gespann, bei dem auf dem Zugfahrzeug eine Signalverarbeitungsvorrichtung für Sensoren auf einer Presse vorgesehen ist. Während aus der EP-A-203 662 keine Lehre bzgl. der Sensoren hervorgeht, beschränkt sich die US-A-5,913,801 auf einen Sensor zur Lageortung, der genausogut auf dem Zugfahrzeug angebracht sein könnte, weil keine Interaktion zwischen dem Zugfahrzeug und der Presse stattfindet.

Das der Erfindung zugrunde liegende Problem wird darin gesehen, daß die Befestigung und Verstellung der Stützräder einen nicht unwesentlichen baulichen Aufwand bedeutet und nicht ausreichend bedienerfreundlich ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise entfallen die Stützräder, was zum Entfallen von Kosten führt, die Baumaße verkleinert, verhindert, daß sich Erntegut an den Stützrädern staut und das Gewicht des Aufnehmers reduziert. Die Stellvorrichtung wird vorzugsweise elektrisch angesteuert, und der Abstandswert kann auf einfache, elektrische Weise evtl. auch aus der Ferne eingestellt werden. Um zu vermeiden, daß die Presse mit allen Komponenten versehen werden muß, die zum vertikalen Verstellen des Aufnehmers erforderlich sind, wird die Stellvorrichtung von einem Zugfahrzeug der Presse, z. B. einem Ackerschlepper aus gesteuert und mit Energie zur Verstellung versorgt. Die Verbindung mit einer Steuer- oder Regelvorrichtung auf dem Zugfahrzeug macht es auch möglich, die Signal mit anderen Signalen, z. B. der Fahrtgeschwindigkeit, dem Fahrtrichtungswechsel etc. zu verknüpfen.

Es ist zwar bei selbstfahrenden Erntemaschinen, z. B. Mähdreschern, bekannt, die Höhe des Vorsatzes mittels Sensoren zu ermitteln und zu steuern. Dort handelt es sich jedoch nicht um Aufnehmer von Erntegutschwaden und um gezogene Geräte, sondern um Schneidwerke deren relative Stellung gegenüber dem Boden grundsätzlich nur von der Stellung des Fahrzeugs alleine abhängt, während bei einer Presse der Abstand zwischen dem Aufnehmer und dem Boden von der Relativbewegung zwischen der Presse und dem Zugfahrzeug abhängt.

Die Verwendung eines berührungslosen Sensors, z. B. eines Hochfrequenz- oder Ultraschallsensors, bewirkt, daß auch der Ersatz des Stützrades keine Fangstelle für Erntegut bietet. Außerdem liefert der berührungslose Sensor auch dann ein korrektes Signal, wenn der Boden leicht nachgibt und das Stützrad bei hohem Gewicht des Aufnehmers einsinken würde.

Beim Einsatz auf Boden mit Unkrautbewuchs oder dergl., auf dem eine Messung mit Wellen verfälschte Signale bringen könnte, ist es hilfreich, einen Sensor mit einem Schlitten oder dergl. zu benutzen, der während des Betriebs auf dem Boden gleitet. Derartige Schlitten können derart ausgebildet und/oder angeordnet sein, daß sie in einer Außerbetriebsstellung gesichert werden können.

Der Sensor befindet sich zum einen an einer geschützten Stelle und liefert ein relativ zeitgleiches Signal, wenn er sich unterhalb des Aufnehmers befindet. Der Sensor kann aber auch voreilen und die Lage des Aufnehmers beim Überqueren einer kleinen Mulde stabil halten, da er diese im voraus erkennt. In dem Fall, daß der Sensor oder die Sensoren vor dem Aufnehmer angebracht sind, geschieht dies vorteilhafterweise mittels eines oder mehrerer auskragender Arme oberhalb des Aufnehmers.

Um zu vermeiden, daß der Aufnehmer aufgrund der vielfältigen Bodenunebenheiten ständig verstellt wird, sind mehrere Sensoren über der Breite des Aufnehmers vorgesehen, so daß z. B. stets die geringste aller gemessenen Entfernungen als Referenzwert herangezogen wird und damit Furchen und dergl. unberücksichtigt bleiben.

Die Stellvorrichtung kann vereinfacht ausgeführt werden, wenn sie einfachwirkend ausgebildet wird und den Aufnehmer nur anhebt, während die Absenkung durch die Gewichtskraft erfolgt. Es wäre auch möglich, den Stellmotor nur zur gezielten Absenkung einzusetzen, während das Anheben mechanisch oder in Abhängigkeit von einer anderen Stellbewegung an der Presse, z. B. mittels eines separaten Stellmotors erfolgt.

Eine schnelle, leicht anzusteuernde und mit ausreichender Kraft erfolgende Verstellung des Aufnehmers erfolgt durch Einsatz elektrischer und/oder hydraulischer Energie.

Eine andere Art, die Stellung des Aufnehmers gegenüber der Presse zu steuern oder regeln, besteht in der Verwendung eines Potentiometers, das stets die Relativbewegung des frei getragenen Aufnehmers gegenüber einem auf dem Boden gleitenden oder rollenden Sensor erfaßt und zu der gewünschten vertikalen Verstellung führt.

Der Vorteil eines quer zu der Fahrtrichtung vertikal schwenkbaren Aufnehmers besteht darin, daß mittels an der Seite vorgesehener Sensoren der Aufnehmer stets parallel zum Boden geführt werden kann, was insbesondere dann sehr wirksam ist, wenn der Aufnehmer eine große Breite einnimmt.

Die Verwendung einer Deaktivierungsvorrichtung macht es möglich, den Aufnehmer in einer Stellung zu belassen, in der von den Sensoren erzeugte Signale ohne Einfluß bleiben. Beispielsweise kann der Aufnehmer in einer hoch gelegenen Transportstellung verharren.

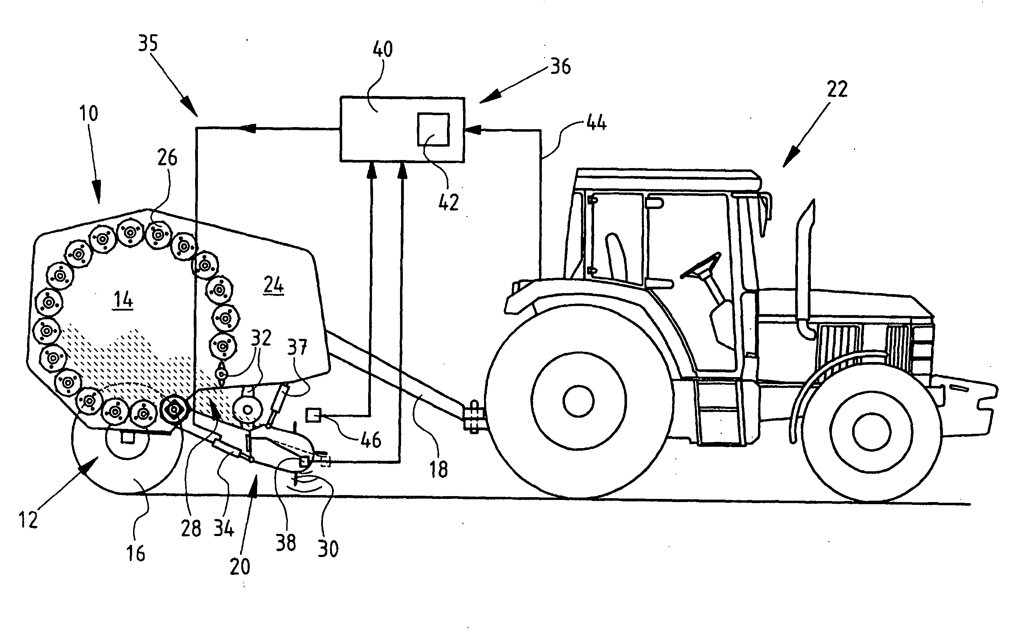

In der Zeichnung ist ein nachfolgend näher beschriebenes Ausführungsbeispiel der Erfindung dargestellt. Die einzige Figur der Zeichnung zeigt ein Gespann aus einer Presse mit einem erfindungsgemäßen Aufnehmer und einem Zugfahrzeug.

Eine Presse (10) gemäß der Zeichnung ist mit einem Rahmen (12), einem Ballenpreßraum (14), Rädern (16), einer Deichsel (18) und einem erfindungsgemäßen Aufnehmer (20) versehen und wird von einem Zugfahrzeug (22) gezogen.

Die Presse (10) ist in dem dargestellten Ausführungsbeispiel als eine Rundballenpresse mit einem Ballenpreßraum (14) fester Größe ausgebildet; statt dessen könnte auch eine andere Art einer Presse, z. B. eine Rundballenpresse mit größenvariablem Ballenpreßraum, eine Quaderballenpresse, eine Großballenpresse oder dergleichen gezogenes Gerät mit einem Aufnehmer (20) gewählt werden.

Der Rahmen (12) ist als Schweißzusammenbau gebildet und trägt Seitenwände (24), zwischen denen sich rollenartige Preßelemente (26) erstrecken.

Der Ballenpreßraum (14) wird seitlich von den Seitenwänden (24) und umfangsseitig von den Preßelementen (26) abgeschlossen. Die Preßelemente (26) lassen an einer Stelle vorne unten einen Einlaß (28), durch den Erntegut in den Ballenpreßraum (14) eingespeist werden kann.

Die Räder (16) stützen den Rahmen (12) bzw. die gesamte Presse (10) auf dem Boden ab.

Die Deichsel (18) stellt eine Verbindung zwischen dem Rahmen (12) und dem Zugfahrzeug (22) her und erstreckt sich im wesentlichen horizontal oberhalb des Aufnehmers (20).

Der Aufnehmer (20) ist in der Art einer sogenannten Pick-Up ausgebildet, d. h. mit mehreren umlaufenden Reihen von federnden Zinken (30) versehen, die über den Boden streifen und dabei auf ihm liegendes Erntegut anheben und nach hinten zu dem Einlaß (28) fördern. In der gezeigten aber nicht erforderlichen Weise können zwischen dem Aufnehmer (20) und dem Einlaß (28) Förderrotoren (32) vorgesehen sein, was jedoch nicht zwingend ist. Der Aufnehmer (20) ist in bekannter und daher nicht dargestellter Weise vertikal schwenkbar an dem Rahmen (12) befestigt und wird mittels einer Stellvorrichtung (34) vertikal verstellt, die Teil einer Stelleinrichtung (35) ist.

Die Lage des Aufnehmers (20) soll jeweils so gewählt werden, daß die Zinken (30) mit geringem Abstand über den Boden streichen, was allerdings für die gesamte Breite des Aufnehmers (20) gilt. So soll vermieden werden, daß der Aufnehmer (20) absinkt, wenn er teilweise oder mit der gesamten Breite kurzfristig über eine Mulde oder dergleichen führt. Andererseits soll der Aufnehmer (20) in eine Außerbetriebsstellung angehoben werden, wenn die Presse (10) eine Transportfahrt unternimmt.

Zur Steuerung oder Regelung des Abstandes zwischen dem Aufnehmer (20) und dem Boden ist in der Stelleinrichtung (35) eine Steuervorrichtung (36) vorgesehen, zu der ein Sensor (38), eine Signalverarbeitungseinheit (40), eine Eingabeeinheit (42), eine Energieversorgung (44) und verschiedene Verbindungsleitungen gehören, die schließlich auf die Stellvorrichtung (34) einwirken.

Die Stellvorrichtung (34) ist in der einfachsten Bauart als ein einfachwirkender Hydraulikzylinder ausgebildet, der mittels eines nicht gezeigten aber an sich bekannten Elektromagnetventils gesteuert werden kann. Ein einfachwirkender Hydraulikmotor bzw. -zylinder reicht aus, weil die Bewegung nach unten aufgrund der Schwerkraft eintritt. Allerdings kann mittels eines doppeltwirkenden Hydraulikzylinders die Stellgeschwindigkeit erhöht werden. Anstelle des Hydraulikzylinders könnte auch ein Elektromotor mit Spindelantrieb verwendet werden. Die Stellvorrichtung (34) kann auch unabhängig von der Signalverarbeitungseinheit (40) von dem Zugfahrzeug (22) aus bedient werden, um den Aufnehmer (20) in seine Transportstellung anzuheben und/oder auf den Boden abzusenken. Die Stellvorrichtung (34) wirkt in dem dargestellten Ausführungsbeispiel nur auf einem Teil des maximalen Stellwegs des Aufnehmers (20), nämlich soweit eine Verstellung während des Betriebs erforderlich ist; im übrigen kann sich der Aufnehmer (20) gegenüber der Stellvorrichtung (34) aufwärts frei bewegen. Wenn der Aufnehmer (20) in die Transportstellung angehoben werden soll, wird ein Stellmotor (37) betätigt, der an dem Aufnehmer (20) und dem Rahmen (12) angebracht ist und den Aufnehmer (20) vollkommen anhebt. Sobald dieser drucklos gemacht wird, senkt sich der Aufnehmer (20) bis in eine Stellung ab, in der er von der Stellvorrichtung (34) getragen wird. Die Verwendung des Stellmotors (37) ist nicht erforderlich, und, falls kein eigener Stellmotor (37) verwendet wird, erfolgt die gesamte Bewegung durch die Stellvorrichtung (34).

Die Steuervorrichtung (36) ist vorteilhafterweise teilweise auf der Presse (10) und teilweise auf dem Zugfahrzeug (22) vorgesehen. In einer abgewandelten Bauweise kann sich die Steuervorrichtung (36) auch auf der Presse (10) alleine befinden und von dem Zugfahrzeug (22) ferngesteuert werden; sie kann elektrisch, elektronisch, in CAN-Bus-Technik oder anderer Weise ausgebildet werden.

Der Sensor (38) ist in dem dargestellten Ausführungsbeispiel als ein berührungsloser Sensor (38) ausgebildet, der Wellen im Hochfrequenz- oder Ultraschallbereich zum Boden sendet und deren Reflektionsverhalten heranzieht, um die zurückgelegte Wegstrecke zu berechnen und daraus ein Signal für den Abstand des Aufnehmers (20) gegenüber dem Boden zu gewinnen. Gemäß der Darstellung befindet sich der Sensor (38) innerhalb des Umrisses des Aufnehmers (20). Eine solche Anordnung kann z. B. dadurch erfolgen, daß der Sensor (38) zwischen benachbarten Bewegungsbahnen der Zinken (30) in dem Aufnehmer (20) befestigt wird. Gemäß einer gestrichelten Darstellung kann der Sensor (38) stattdessen oder zusätzlich auch vor dem Aufnehmer (20) vorgesehen und von einem nicht näher bezeichneten Arm getragen werden. In nicht dargestellter Weise kann auch ein Sensor in der Form eines Gleitschuhs oder dergleichen vorgesehen werden, der der Bodenkontur folgt.

Über der Breite des Aufnehmers (20) sind in diesem Ausführungsbeispiel auf nicht gezeigte Weise drei Sensoren (38) vorgesehen, und zwar in den Seitenbereichen und in der Mitte. Die Signalverarbeitungseinheit (40) wählt unter den von den Sensoren (38) gelieferten Signalen dasjenige aus, das den geringsten Abstand zum Boden repräsentiert.

Die Signalverarbeitungseinheit (40) ist in der Art eines Bordcomputers ausgeführt und ist normalerweise auf dem Zugfahrzeug (22) vorgesehen. Gegebenenfalls kann die Signalverarbeitungseinheit (40) auch lösbar und tragbar ausgebildet sein und in einem anderen Gespann verwendet werden. Die Signalverarbeitungseinheit (40) basiert auf Hardware- und/oder Softwarekomponenten; vorzugsweise enthält sie jedoch ein Computerprogramm, das eine Vielzahl von Rechenoperationen und Verknüpfungen ermöglicht. In die Signalverarbeitungseinheit (40) wird Energie aus der Energieversorgung (44) von dem Zugfahrzeug (22) eingespeist, die die Rechenvorgänge ermöglicht. Außerdem erhält die Signalverarbeitungseinheit (40) das Signal oder die Signale von dem bzw. den Sensoren (38), so daß der aktuelle Abstand zum Boden bekannt wird, bzw. errechnet werden kann. Wenn Signale mehrerer Sensoren (38) zugeführt werden, findet eine Ermittlung des Signals zu dem kleinsten Abstand statt, wobei gegebenenfalls auch ein Zeitglied verwendet werden kann, das verhindert, daß kurzfristige Signaländerungen für vernachlässigbare Konturänderungen unterdrückt werden. Von der Signalverarbeitungseinheit (40) führt eine nicht näher bezeichnete Leitung zu der Stellvorrichtung (34), um dieser ein Signal zum Aus- oder Einfahren zuzuleiten.

Die Eingabeeinheit (42) ist üblicherweise in der Art einer Tastatur ausgebildet und ist dazu geeignet, bestimmte Mindesthöhen oder Betriebszustände einzustellen bzw. einzuleiten. Beispielsweise kann ein mehr oder weniger aggressives Rechen mittels der Zinken (30) eingestellt werden. Außerdem kann der Aufnehmer (20) in eine Transportstellung angehoben werden. Es ist möglich, die Signalverarbeitungseinheit (40) auf der Presse (10) und die Eingabeeinheit (42) auf dem Zugfahrzeug (22) anzuordnen.

Die Energieversorgung (44) besteht in einer üblichen 12 V Spannungsversorgung von dem Zugfahrzeug (22) aus. Grundsätzlich wäre es jedoch auch möglich, die Energieversorgung durch eine Batterie in der Signalverarbeitungseinheit (40) oder durch Solarstrom vorzunehmen.

Schließlich ist in Verbindung mit der Signalverarbeitungseinheit (40) eine Deaktivierungsvorrichtung (46) vorgesehen, damit der Aufnehmer (20) z. B. seine Transportstellung einhält. Die Deaktivierungsvorrichtung (46) ist in dem vorliegenden Ausführungsbeispiel als ein Kontaktschalter ausgebildet, der ein Signal an die Signalverarbeitungseinheit (40) liefert, an dem diese erkennt, daß der Aufnehmer (20) seine Transportstellung erreicht hat und nicht mehr aufgrund der Signale der Sensoren (38) verstellt werden soll.

Nach alledem funktioniert die Erfindung wie folgt.

Zum Arbeitseinsatz wird die Presse (10) mit dem Zugfahrzeug (22) auf ein Feld gefahren und in Betrieb gesetzt. Die Signalverarbeitungseinheit (40) wird aktiviert, so daß die Sensoren (38) den Abstand zwischen dem Aufnehmer (20) und dem Boden ermitteln und die Stellvorrichtung (34) gemäß einer Vorgabe der Eingabeeinheit (42) verstellen. Wenn im weiteren die Presse (10) über das Feld gezogen wird, erkennen die Sensoren (38) die Änderungen des Abstands zum Boden, leiten diese Information an die Signalverarbeitungseinheit (40) weiter, wo sie mit einem Sollwert verglichen wird. Je nach der Richtung der Abweichung wird dann die Stellvorrichtung (34) aus- oder eingefahren, um den Istwert an den Sollwert anzugleichen. Wenn der Aufnehmer (20) mittels des Stellmotors (37) wieder in seine Transportstellung angehoben ist, wird die soft- oder hardwaremäßige Rechenoperation seitens der Signalverarbeitungseinheit (40) aufgrund des Signals aus der Deaktivierungsvorrichtung (46) wieder beendet.

## Patentansprüche

1. Stelleinrichtung (35) eines Aufnehmers (20) für Erntegut an einer landwirtschaftlichen Presse (10) mit einer Stellvonichtung (34) zum Verändern des Abstandes zwischen dem Aufnehmer (20) und dem Boden, **gekennzeichnet durch** wenigstens einen Sensor (38) zur Ermittlung der relativen Stellung des Aufnehmers (20) gegenüber dem Boden und eine Signalverarbeitungsvorrichtung (40) zum Beaufschlagen der Stellvorrichtung (34) abhängig von einem Ausgangssignal des Sensors (38), wobei die Signalverarbeitungsvorrichtung (40) und ein Betriebssystem der Stellvorrichtung (34) auf einem Zugfahrzeug (22) der Presse (10) vorgesehen ist.

2. Stelleinrichtung nach Anspruch 1, **dadurch gekennzeichnet, daß** der Sensor (38) als berührungsloser Sensor (38) ausgebildet ist.

3. Stelleinrichtung nach Anspruch 1, **dadurch gekennzeichnet, daß** der Sensor (38) auf den Boden absenkbar ist.

4. Stelleinrichtung nach einem oder mehreren der vorherigen Ansprüche, **dadurch gekennzeichnet, daß** der Sensor (38) unterhalb des Aufnehmers (20) oder vor diesem vorgesehen ist.

5. Stelleinrichtung nach einem oder mehreren der vorherigen Ansprüche, **dadurch gekennzeichnet, daß** über die Breite des Aufnehmers (20) mehrere Sensoren (38) vorgesehen sind.

6. Stelleinrichtung nach einem oder mehreren der vorherigen Ansprüche, **dadurch gekennzeichnet, daß** die Stellvorrichtung (34) nur in einer Richtung wirkt.

7. Stelleinrichtung nach einem oder mehreren der vorherigen Ansprüche, **dadurch gekennzeichnet, daß** die Stellvorrichtung (34) elektrisch oder hydraulisch betrieben wird.

8. Stelleinrichtung nach einem oder mehreren der vorherigen Ansprüche, **dadurch gekennzeichnet, daß** der Sensor (38) ein Potentiometer zum Bestimmen einer relativen Stellung zwischen sich und dem Aufnehmer (20) enthält.

9. Stelleinrichtung nach einem oder mehreren der vorherigen Ansprüche, **dadurch gekennzeichnet, daß** der Aufnehmer (20) quer zu der Fahrtrichtung der Presse (10) um eine im wesentlichen horizontale Achse schwenkbar ist.

10. Stelleinrichtung nach einem oder mehreren der vorherigen Ansprüche, **gekennzeichnet durch** eine Deaktivierungsvorrichtung (46) zum Deaktivieren der Signalverarbeitungsvorrichtung (40), wenn der Aufnehmer (20) eine vorbestimmte Stellung eingenommen hat.

## Claims

1. Adjusting apparatus (35) of a pick-up (20) for harvested crop on an agricultural baler (10), with an adjusting device (34) for altering the spacing between the pick-up (20) and the ground, **characterized by** at least one sensor (38) for detecting the position of the pick-up (20) relative to the ground and a signal processing device (40) for acting on the adjusting device (34) in dependence on an output signal of the sensor (38), wherein the signal processing device (40) and an operating system of the adjusting device (34) are provided on a towing vehicle (22) of the baler (10).

2. Adjusting apparatus according to claim 1, **characterized in that** the sensor (38) is in the form of a contact-free sensor (38).

3. Adjusting apparatus according to claim 1, **characterized in that** the sensor (38) can be lowered on to the ground.

4. Adjusting apparatus according to one or more of the preceding claims, **characterized in that** the sensor (38) is provided underneath the pick-up (20) or ahead of it.

5. Adjusting apparatus according to one or more of the preceding claims, **characterized in that** a plurality of sensors (38) are provided over the width of the pick-up (20).

6. Adjusting apparatus according to one or more of the preceding claims, **characterized in that** the adjusting device (34) acts in one direction only.

7. Adjusting apparatus according to one or more of the preceding claims, **characterized in that** the adjusting device (34) is operated electrically or hydraulically.

8. Adjusting apparatus according to one or more of the preceding claims, **characterized in that** the sensor (38) comprises a potentiometer for determining a relative position between itself and the pick-up (20).

9. Adjusting apparatus according to one or more of the preceding claims, **characterized in that** the pick-up (20) can pivot transverse to the direction of travel of the baler (10) about a substantially horizontal axis.

10. Adjusting apparatus according to one or more of the preceding claims, **characterized by** a deactivating device (46) for deactivating the signal processing device (40) when the pick-up (20) has assumed a predetermined position.

## Revendications

1. Système (35) pour le positionnement d'un ramasseur (20) de produit récolté sur une presse agricole (10) comportant un dispositif de positionnement (34) destiné à modifier la distance entre le ramasseur (20) et le sol, **caractérisé par** au moins un détecteur (38) destiné à évaluer la position relative du ramasseur (20) par rapport au sol, et un dispositif de traitement de signaux (40), destiné à faire intervenir le dispositif de positionnement (34) en fonction d'un signal de sortie du détecteur (38), le dispositif de traitement de signaux (40) et un système de mise en service du dispositif de positionnement (34) étant prévus sur une vehicule de traction (22) de la presse (10).

2. Système de positionnement selon la revendication 1, **caractérisé en ce que** le détecteur (38) consiste en un détecteur (38) sans contact.

3. Système de positionnement selon la revendication 1, **caractérisé en ce que** le détecteur (38) peut être abaissé jusque sur le sol.

4. Système de positionnement selon l'une ou plusieurs des revendications précédentes, **caractérisé en ce que** le détecteur (38) est situé au-dessous, ou devant le ramasseur (20).

5. Système de positionnement selon l'une ou plusieurs des revendications précédentes, **caractérisé en ce que**, sur la largeur du ramasseur (20), sont prévus plusieurs détecteurs (38).

6. Système de positionnement selon l'une ou plusieurs des revendications précédentes, **caractérisé en ce que** le dispositif de positionnement (34) n'agit que dans une seule direction.

7. Système de positionnement selon l'une ou plusieurs des revendications précédentes, **caractérisé en ce que** le dispositif de positionnement (34) est actionné électriquement ou hydrauliquement.

8. Système de positionnement selon l'une ou plusieurs des revendications précédentes, **caractérisé en ce que** le détecteur (38) contient un potentiomètre pour la détermination d'une position relative entre lui et le ramasseur (20).

9. Système de positionnement selon l'une ou plusieurs des revendications précédentes, **caractérisé en ce que** le ramasseur (20) est basculable autour d'un axe pratiquement horizontal transversal à la direction de déplacement de la presse (10).

10. Système de positionnement selon l'une ou plusieurs des revendications précédentes, **caractérisé par** un dispositif de désactivation (46) destiné à désactiver le dispositif de traitement de signaux (40) quand le ramasseur (20) atteint une position prédéterminée.
